# EUROPÄISCHE PATENTSCHRIFT

(11) **EP 3 375 076 B1**
(45) Veröffentlichungstag und Bekanntmachung des Hinweises auf die Patenterteilung: **30.09.2020**
(21) Anmeldenummer: 16798083.8
(22) Anmeldetag: 25.10.2016
(51) Int. Cl.: H02K 5/22, H02K 7/00, B60L 50/50, B60L 50/64, H02K 11/00, H01M 2/10, H02K 9/20, H02K 11/215, H02K 11/33, H02K 9/22

(54) **ELEKTRO-ANTRIEBSSYSTEM**
ELECTRIC DRIVE SYSTEM
SYSTÈME DE PROPULSION ÉLECTRIQUE

(30) Priorität: 11.11.2015 DE 102015014509
(43) Veröffentlichungstag der Anmeldung: 19.09.2018
(73) Patentinhaber: Bergische Universität Wuppertal, 42119 Wuppertal (DE)
(72) Erfinder: BUTZMANN, Stefan, 58579 Schalksmühle (DE); FINKE, Marius, 50769 Köln (DE)
(74) Vertreter: Cohausz Hannig Borkowski Wißgott
(86) Internationale Anmeldenummer: PCT/EP2016/001768
(87) Internationale Veröffentlichungsnummer: WO 2017/080631

(56) Entgegenhaltungen:
- EP-A2- 2 343 752
- WO-A1-2014/111233
- WO-A1-2015/140952
- DE-A1- 2 529 227
- DE-C1- 19 632 391

## Beschreibung

Die Erfindung betrifft ein Elektro-Antriebssystem, insbesondere für Fahrzeuge, umfassend einen Elektromotor, eine Energieversorgung, insbesondere einschließlich Pulswechselrichter und Leistungselektronik, ein Motorgehäuse und ein zylindrisches Gehäuse der Energieversorgung, wobei die Energieversorgung axial benachbart zum Elektromotor und in Umfangsrichtung um die Drehachse des Elektromotors herum angeordnet ist, insbesondere in einer Winkelerstreckung von 360 Grad.

Ein solches Elektro-Antriebssystem ist bekannt aus den Veröffentlichungen DE 25 29 227 A1 und DE 196 32 391 C1.

Heutige Antriebssysteme dieser Art umfassen im Bereich der Energieversorgung üblicherweise Energiespeicherzellen, wie beispielsweise Batterien, worunter insbesondere solche der wiederaufladbaren Art verstanden werden, wie z.B. Lithium-Polymer-Akkus. Zusätzlich sind regelmäßig in einem solchen Antriebssystem Pulswechselrichter vorgesehen.

Hierbei haben die Energiespeicherzellen die Aufgabe, die für den Betrieb des Antriebssystems, insbesondere das Fahren eines Fahrzeugs benötigte Energie bereitzustellen bzw. während des Ladens zu speichern. Der Pulswechselrichter wandelt die von der Batterie bereitgestellte Gleichspannung in eine üblicherweise dreiphasige Wechselspannung, mit der ein Elektromotor, z.B. eine Synchron- oder Asynchronmaschine dann über eine Leistungselektronik betrieben wird, welche die Ansteuerung der Statorwicklungen übernimmt.

Die Energiespeicherzellen, Pulswechselrichter und Leistungselektronik werden hierbei meist unabhängig voneinander gefertigt und bilden selbstständige Einheiten, die über Kabelbäume miteinander verbunden werden. Hierbei ist bei der Systemauslegung immer ein geeigneter Kompromiss zwischen der Größe der Ströme, die in dem System fließen und der Spannungslage zu finden.

Für ein Antriebssystem mit einer Leistung von z.B. 100kW könnte die Batterie entweder mit einer DC-Spannung von 100V und einem Ausgangsstrom von ca. 1000A ausgelegt werden oder aber mit höheren Spannungen und entsprechend niedrigeren Strömen.

Beispielsweise im Anwendungsgebiet der heutigen Elektrofahrzeuge hat sich zur Zeit eine Spannungslage von ca. 400-600V durchgesetzt, was zu Strömen in Bereich von einigen hundert Ampere führt. Niedrige Spannungen und höhere Ströme sind in den bisherigen Antriebssystemen nicht sinnvoll umsetzbar, da die Querschnitte der stromführenden Kabel und Motorwicklungen in diesem Fall massiv ansteigen müssten, was zu einer Erhöhung des Fahrzeuggewichts und der Kosten führen würde.

Die Spannungslage von typ. > 400V führt weiterhin im bisherigen Stand der Technik zu erheblichen Anforderungen hinsichtlich der elektrischen Sicherheit solcher Systeme und bringt erhebliche Aufwände bzgl. Isolation der einzelnen Komponenten vom Fahrzeug-Chassis und der entsprechenden Isolationsüberwachung mit sich.

Diese Aufwände könnten unter Bezug auf VDE-Normen erst für Spannungen <60V reduziert werden. Die jedoch dabei benötigten deutlich erhöhten Ströme können jedoch bei den bisherigen Antriebssystemen aufgrund der zu überbrückenden Strecken und der dafür nötigen Leitungsquerschnitte nicht wirtschaftlich gehandhabt werden.

Ein wesentliches Kriterium bei der Auslegung eines elektrischen oder hybriden Antriebs für Fahrzeuge ist dabei die volumetrische Energie- bzw. Leistungsdichte, d.h. das Volumen des elektrischen Antriebsstrangs bezogen auf den Energieinhalt (der ein Maß für die Reichweite des Fahrzeugs darstellt) bzw. bezogen auf das Gewicht des Antriebsstrangs.

Vor dem Hintergrund vorgenannter Erläuterungen ist es eine Aufgabe der Erfindung einen solchen elektrischen Antrieb möglichst kompakt zu fertigen (d.h. mit minimalem Volumen) und so ein Antriebssystem bereit zu stellen, das die zu überbrückenden Distanzen zwischen der Energieversorgung und dem betriebenen Elektromotor reduziert.

Weiterhin ist es bevorzugt auch eine Aufgabe der Erfindung, ein Antriebssystem zu schaffen, das eine Redundanz in der Energieversorgung bereitstellt und weiter bevorzugt mit gegenüber der heutigen typischen Spannungslage deutlich verringerten Spannungen betrieben werden kann, insbesondere mit Phasenspannungen kleiner gleich 60 Volt, um die Isolationsanforderungen zu minimieren und so ebenfalls die erforderlichen Abstände zwischen den einzelnen Sub-Komponenten und damit in letzter Konsequenz auch die Kosten.

Diese Aufgabe wird erfindungsgemäß dadurch gelöst, dass die Energieversorgung axial benachbart zum Elektromotor und in Umfangsrichtung um die Drehachse des Elektromotors herum angeordnet ist. Unter der Drehachse wird dabei nicht die Welle, sondern die mathematische Mittenachse im Mittelpunkt der Motorwelle verstanden. Die Erstreckung der Energieversorgung, bzw. eines diese aufnehmenden Gehäuses muss nicht zwingend über den vollen Umfangswinkel von 360 Grad erfolgen, ist jedoch bevorzugt vorgesehen, so dass in diesem Fall sich eine vollzylindrische Energieversorgung axial seitlich neben dem Elektromotor ergibt.

Weiterhin ist es erfindungsgemäß vorgesehen, dass das Gehäuse der Energieversorgung in der axialen Richtung in mehrere Scheibenelemente unterteilt ist, wobei jedes Scheibenelement in Umfangsrichtung in wenigstens zwei zumindest logische Segmente unterteilt ist, wobei eine logische / elektrische Verschaltung durch die elektrische Verschaltung der im Gehäuse angeordneten Batteriezellen vorgenommen ist, wobei die Gesamtanzahl aller in axialer Richtung an einer gemeinsamen Umfangsposition hintereinanderliegenden zumindest logischen / elektrischen Segmente ein Energiespeichermodul bildet, mit welchem alleine bereits der Betrieb des Elektromotors möglich ist, und zwischen den sich gegenüberliegenden Stirnflächen von Motorgehäuse und Gehäuse der Energieversorgung wenigstens eine Steuerplatine angeordnet ist, die eingerichtet ist, die Energie der Energieversorgung auf das Statorbestromungssystem des Elektromotors zu verteilen, insbesondere gesteuert oder geregelt zu verteilen, wobei die gebildeten Energiespeichermodule jeweils in Verbindung mit einer eigenen Elektronik auf der wenigstens einen Steuerplatine ein jeweiliges autarkes Funktionsmodul bilden, das jeweils alleine ausreicht, um den Motor zu betreiben und wobei jeweils einem Energiespeichermodul eine eigene Steuerplatine oder ein Segment einer einzigen Steuerplatine zugeordnet ist, wobei durch die zugeordneten Steuerplatinen oder durch die Segmente einer einzigen Steuerplatine insgesamt eine Gesamtleistungselektronik zur Steuerung des Elektromotors ausgebildet ist, an der die jeweiligen gereihten Summenspannungen von den an einer gemeinsamen Umfangsposition axial hintereinander liegenden Segmenten anliegen, und die Gesamtleistungselektronik durch die Summe einzelner Leistungselektroniken gebildet ist, die jeweils für sich in der Lage sind, den Motor zu betreiben.

Bevorzugt wird dabei unter der Energieversorgung eine Einheit verstanden, welche die zu nutzende Energie in sich umfasst, insbesondere also eine Energieversorgung nicht bloß weiterleitende bzw. durchleitende Funktion für von außerhalb stammende Energie hat.

Der wesentliche Gedanke der Erfindung ist es, die Energieversorgung örtlich so nah wie möglich an den Elektromotor heranzuführen. Durch die Anordnung axial benachbart zum Elektromotor, insbesondere also unmittelbar oder nur über ein mechanisches Zwischenelement angrenzend an den Elektromotor, bevorzugt an eine axiale Stirnseite / Stirnfläche des Elektromotors besteht allenfalls noch die Notwendigkeit, abgesehen von inneren Stromwegen, die Energie aus der Energieversorgung über die axiale Länge des Elektromotors bzw. der Energieversorgung und ggfs. die radiale Beabstandung zwischen den Statoranschlüssen und der Energieversorgung zu führen. Die zu überbrückenden Wege sind also ersichtlich gegenüber dem Stand der Technik deutlich reduziert.

Selbst bei einem Betrieb eines solchen Antriebssystems mit den bislang verwendeten Spannungen ergeben sich bereits deutliche Vorteile, wobei die Erfindung jedoch auch die Möglichkeit erschließt, die Spannungslage abzusenken, da damit bedingte erhöhte Leiterquerschnitte zur Führung gleichbleibender Leistung in den verkürzten Leitungswegen handhabbar werden.

In bevorzugter Ausführung kann die Energieversorgung, bzw. ein diese umfassendes zylindrisches Gehäuse an einer axialen Stirnfläche des Motorgehäuses befestigt sein, z.B. an derjenigen Stirnfläche, die der Motorabtriebswelle gegenüberliegt. In diesem Fall wird im Gehäuse der Energieversorgung keine mittlere axiale Ausnehmung benötigt, um die Motorwelle hindurchzuführen, so dass auch solche mittigen Volumenanteile des Gehäuses für die Energieversorgung, z.B. Batteriezellen genutzt werden können.

Es besteht jedoch auch die Möglichkeit, dass die Motorabtriebswelle durch die Energieversorgung, insbesondere ein diese umfassendes Gehäuse hindurchgeführt ist, insbesondere hierdurch die Energieversorgung in Umfangsrichtung um die Motorabtriebswelle herum angeordnet ist. In diesem Fall wird das Gehäuse der Energieversorgung eine bevorzugt zentrische Ausnehmung aufweisen, in der die Motorwelle angeordnet ist.

Die Erfindung sieht vor, die Energieversorgung, insbesondere die dafür benötigten Energiespeicherzellen (Batteriezellen) in einem zylindrischen, bei durchgeführter Welle auch hohlzylindrischen Gehäuse anzuordnen. Bevorzugt liegen dabei die Zylinderachse der Energieversorgung, bzw. von dessen Gehäuse und die Motorachse kollinear.

Weiterhin bevorzugt ist die Anordnung so, dass die axiale Länge der Energieversorgung, bzw. von dessen Gehäuse zumindest im Wesentlichen gleich der axialen Länge des Motorgehäuses ist, allenfalls bis zu 150% von dessen Länge entspricht.

In bevorzugter Ausführung kann es vorgesehen sein, dass das zylindrische Gehäuse in radialer Richtung nicht über das Motorgehäuse übersteht, besonders bevorzugt die Mantelflächen von Motorgehäuse und zylindrischem Gehäuse fluchtend angeordnet sind. Es ergibt sich hierdurch eine insgesamt zylindrische Einheit, bei der ein vorderer Teil vom Motor und ein hinterer Teil von der Energieversorgung eingenommen wird.

Zur Vollständigkeit ist angemerkt, dass der Begriff "zylindrisch" nicht zwingend einen Kreisquerschnitt bedingt, es jedoch bevorzugt ist, dass ein solcher zumindest im Wesentlichen vorliegt.

Die erfindungsgemäße Anordnung schafft insgesamt eine handhabbare Einheit, die die Energieversorgung und komplett den Elektromotor umfasst, insbesondere auch die gesamte Elektronik zur Steuerung des Elektromotors und bevorzugt auch für das Energiemanagement der Energiespeicherzellen.

Somit ergibt sich auch eine erhöhte Wartungsfreundlichkeit, da alle wesentlichen Komponenten zum Betrieb lokal konzentiert sind, was auch im bisherigen Spannungsbereich die Isolationsanforderungen reduziert, aufgrund der stärkeren Einkapselung der spannungsführenden Bauteile. Beispielsweise besteht die Möglichkeit in praktisch jeder Werkstatt das komplette Antriebssystem zu tauschen.

Die Erfindung kann in bevorzugter Ausführung vorsehen, dass das zylindrische Gehäuse eine Vielzahl von Ausnehmungen aufweist, in welchen Energiespeicherzellen aufgenommen sind oder zumindest aufnehmbar sind. Diese Ausnehmungen können, insbesondere wenn eine Wellendurchführung nicht vorgesehen ist, im Wesentlichen vollständig den Querschnitt des zylindrischen Gehäuses ausfüllen.

Beispielsweise kann es vorgesehen sein, die Ausnehmungen zylindrisch auszugestalten, so dass am Markt übliche Batteriezellen mit standardisierten Baugrößen darin aufgenommen werden können, z.B. solche, wie Sie aus Laptop-Akkus bekannt sind. Die Ausnehmungen sind dabei bevorzugt so orientiert, dass diese sich in axialer Richtung erstrecken. In den Ausnehmungen können bevorzugt die Batteriezellen in beiden möglichen, sich um 180 Grad unterscheidenden Einbaulagen angeordnet werden, was die gewünschte elektrische Verschaltung vereinfacht.

Die Erfindung sieht vor, dass das zylindrische Gehäuse zur Bildung von Untereinheiten unterteilt ist. Hierdurch ergibt sich zum einen eine größere Wartungsfreundlichkeit und Kostenreduzierung, z.B. wenn defekte Teile ausgetauscht werden müssen.

Zum anderen erschließt sich jedoch auch die Möglichkeit die Energiespeicherzellen (Batteriezellen) innerhalb einer Untereinheit und/oder die Untereinheiten untereinander je nach Wunsch elektrisch parallel oder in Reihe oder gemischt zu verschalten.

Die Erfindung sieht hierfür vor, dass in der axialen Richtung das zylindrische Gehäuse der Energieversorgung in mehrere Scheibenelemente unterteilt ist. Im Falle einer durchgeführten Welle bilden die Scheibenelemente Ringelemente, auf welche nachfolgende Beschreibung ebenso zutrifft.

Z.B. kann dabei die axiale Länge jedes Scheibenelementes angepasst sein, um genau eine axial liegende Energiespeicherzelle (Batteriezelle) in einer jeweiligen zylindrischen Ausnehmung aufzunehmen. Die axiale Länge eines Scheibenelementes kann z.B. genau gleich oder auch (etwas) kleiner sein als die axiale Länge einer Energiespeicherzelle. Ebenso kann die axiale Länge auf ein Vielfaches (wenigstens Zweifaches) der axialen Länge einer Energiespeicherzelle angepasst sein.

Die Erfindung sieht auch vor, dass das zylindrische Gehäuse in Umfangsrichtung in wenigstens zwei Segmente, bevorzugt vier Segmente unterteilt ist. Jedes Segment kann eine Winkelerstreckung von 360° / Anzahl der Segmente aufweisen.

Es ist vorgesehen, dass eine solche Segmentierungz zumindest "logisch" bzw. elektrisch durch die elektrische Verschaltung der im Gehäuse angeordneten Batteriezellen vorgenommen ist. Bei z.B. 4 Segmenten könnten somit in einem Gehäuse der Energieversorgung 4 in Umfangsrichtung nebeneinanderliegende Gruppen von Batteriezellen vorgesehen sein, die jeweils eine eigene elektrische Verschaltung haben, z.B. in Reihe und/oder parallel oder gemischt. Jede Gruppe erstreckt sich dann z.B. über 90 Grad Umfangswinkel oder weniger. Selbstverständlich kann die Segmentierung auch mechanisch durchgeführt sein.

Die vorgenannten Ausführungen der Unterteilung des zylindrischen Gehäuses in axialer Richtung (mechanisch durch Scheibenbildung) bzw. in Umfangsrichtung (zumindest logisch / elektrisch, ggfs. auch mechanisch) ist erfindungsgemäß kombiniert, so dass jedes vorgenannte Scheibenelement in Umfangsrichtung in wenigstens zwei (zumindest logische / elektrische) Segmente, bevorzugt in vier Segmente unterteilt ist. Jedes (Scheibenelemente-) Segment kann wiederum eine Winkelerstreckung von 360° / Anzahl der Segmente aufweisen.

Hier bildet die Gesamtanzahl aller in axialer Richtung an einer gemeinsamen Umfangsposition hintereinanderliegenden (zumindest logischen / elektrischen) Segmente durch elektrische Verschaltung, ein Energiespeichermodul aus, mit welchem alleine bereits der Betrieb des Elektromotors möglich sein kann. Es ergibt sich hierdurch eine Anzahl von Energiespeichermodulen, die der Anzahl der Segmente (pro Scheibenelement) entspricht.

Bei einer solchen Konstruktion weist das Gehäuse der Energieversorgung somit insgesamt eine Anzahl von Untereinheiten auf, die der Anzahl der Scheibenelemente multipliziert mit der Anzahl der Segmente pro Scheibenelement entspricht. Eine entsprechende Vielfalt möglicher elektrischer Verschaltungen kann hierdurch realisiert werden. Dabei liegt bevorzugt eine mechanische Unterteilung zumindest in der Zahl der Scheibenelemente vor.

In einer weiterhin bevorzugten Ausführung der vorgenannten Konstruktion kann es vorgesehen sein, dass zwischen je zwei benachbart axial hintereinander liegenden Scheibenelementen wenigstens eine Verbindungsplatine angeordnet ist. Es kann jedem Scheibenelement eine eigene Verbindungsplatine zugeordnet sein. Auch diese kann nur elektrisch segmentiert sein in der Anzahl der logischen bzw. elektrischen Segmente pro Scheibenelement oder es sind mehrere Verbindungsplatinen, bevorzugt in Segmentform vorgesehen, deren Anzahl der Zahl der Segmente entspricht. Durch eine solche Verbindungsplatine können die Energiespeicherzellen eines Scheibenelementes oder eines jeden Segmentes in einem Scheibenelement untereinander kontaktiert sein, z.B. alle in Reihe geschaltet sein oder alle parallel geschaltet sein oder in Gruppen unterteilt sein, wobei in verschiedenen Gruppen die Energiespeicherzellen unterschiedlich verschaltet sein können (Reihe oder parallel) oder bei gleicher gewählten Verschaltung in den Gruppen bei den verschiedenen Gruppen unterschiedlich hinsichtlich der Einbaulage orientiert sein können.

Eine jeweilige Verbindungsplatine kann auch die Verschaltung zwischen den beiden axial benachbarten Scheibenelementen bzw. deren sich axial gegenüberliegenden Segmenten vornehmen, z.B. diese in Reihe oder wiederum parallel schalten.

Mit den Verbindungsplatinen können bevorzugt so die Energiespeicherzellen wenigstens einer Teilanzahl, bevorzug aller an einer gemeinsamen Umfangsposition axial hintereinander angeordneten (zumindest logischen / elektrischen) Segmente elektrisch in Reihe geschaltet sein.

In einer möglichen Ausführung kann es vorgesehen sein, dass sich über die axiale Länge aller Segmente an derselben Umfangsposition sich z.B. eine Spannung ergibt, die der Summenspannung der in den Segmenten verwendeten Energiespeicherzellen entspricht. Bei dieser Ausführung würden hingegen die Pole an unterschiedlichen axialen Seiten liegen.

Beispielsweise kann es in einer bevorzugten Ausführung vorgesehen sein, dass in einem jeden (zumindest logischen / elektrischen) Segment zwei Gruppen von Energiespeicherzellen gebildet sind, wobei in jeder Gruppe die Energiespeicherzellen parallel geschaltet sind. Eine Gruppe kann z.B. radial innen und eine radial außen liegend angeordnet sein. Die Energiespeicherzellen können in den verschiedenen Gruppen bevorzugt um 180 Grad unterschiedliche Orientierung der Einbaulage aufweisen.

Das kann den Vorteil erschließen, in axialer Richtung über die Segmente gemeinsamer Umfangsposition hinweg die parallel geschalteten Energiespeicherzellen der einen Gruppe und die parallel geschalteten Energiespeicherzellen der anderen Gruppe unabhängig voneinander in Reihe zu verschalten und hierbei die beiden Pole an derselben axialen Seite zugänglich zu haben, insbesondere an der Seite, an welcher gemäß den nachfolgenden Ausführungen wenigstens eine Steuerplatine, z.B. mit Leistungselektronik und/oder Pulswechselrichter vorgesehen ist.

Alle axial hintereinander liegenden Segmente (der Scheibenelemente) an einer gemeinsamen Umfangsposition bilden so wiederum ein Energiespeichermodul mit an einer Seite zugänglichen Polen, quasi wie ein Batteriepack in der Querschnittsform eines Kreissegmentes.

Erfindungsgemäß ist es vorgesehen sein, dass die gebildeten Energiespeichermodule nicht parallel geschaltet werden, sondern jeweils in Verbindung mit einer eigenen Elektronik auf einer Steuerplatine ein jeweiliges autarkes Funktionsmodul bilden, das jeweils alleine ausreicht, um den Motor zu betreiben. Dafür kann die Elektronik einen Pulswechselrichter und Schalter zur Bestromung des Stators umfassen. Es ergibt sich dadurch eine Anzahl von Funktionsmodulen, die der Anzahl der Segmente (pro Scheibenelement) entspricht. Hierfür ist auf einer Steuerplatine zu jedem Segment des Gehäuses der Energieversorgung eine eigene Elektronik zugeordnet, die auf einer einzigen Steuerplatine geometrisch segmentiert ausgeführt sein kann oder es sind mehrere z.B. segmentförmige Steuerplatinen vorhanden, die jeweils einem Segment des Gehäuses zugeordnet sind.

Hierdurch wird auch eine Redundanz geschaffen, da ein Antriebssystem dieser Art auch betriebsbereit ist, wenn z.B. ein logisches / elektrisches Segment eines Scheibenelementes oder sogar alle an einer gemeinsamen Umfangsposition hintereinander liegenden Segmente (und damit ein Funktionsmodul) ausfallen, da hierdurch nicht die Betriebsspannung und die Statoransteuerung entfällt, sondern sich nur die Ladekapazität verringert, in Verbindung mit einem Fahrzeug also nur dessen Reichweite.

Es kann eine Elektronik vorgesehen sein, die die Funktion jedes Funktionsmoduls prüft und bei festgestelltem Defekt dieses komplett abschaltet. Die übrigen Funktionsmodule bleiben dabei betriebsbereit und damit das Antriebssystem insgesamt, lediglich unter Reduktion der Reichweite und des Drehmomentes.

Bevorzugt ist die Form einer jeweiligen Verbindungsplatine an die Form der jeweiligen Scheibenelemente oder deren Segmente angepasst, bevorzugt so, dass diese zwar formkongruent zu den Scheibenelementen /Segmenten ist, jedoch etwas kleiner, um von den Scheibenelementen / Segmenten umschlossen zu werden, ohne dass die Verbindungsplatine von außerhalb des Gehäuses der Energieversorgungseinheit zugänglich ist, zumindest nicht ohne die Scheibenelemente oder deren Segmente voneinander axial zu separieren, die in jeglicher Ausführung bevorzugt im Betriebszustand bündig und einander kontaktierend verbunden sind. Beispielsweise kann so die Verbindungsplatine kreisscheibenförmig oder kreissegmentförmig ausgebildet sein. An wenigstens einer Position, bevorzugt an der äußeren Peripherie der Verbindungsplatine(n) kann diese Kontakte aufweisen, um mit anderen Komponenten elektrisch verbunden zu werden, z.B. mit der nachfolgend beschriebenen Platine. Es kann vorgesehen sein, solche Kontakte an mehreren winkelgleich beabstandeten Positionen an der Peripherie anzuordnen, z.B. in einer Anzahl die der Zahl der zumindest logischen / elektrischen ggfs. auch mechanisch separierten Segmente in einem Scheibenelement entspricht.

Die Erfindung kann in einer Weiterbildung vorsehen, dass in wenigstens einem radial außen liegenden Bereich des zylindrischen Gehäuses, insbesondere in wenigstens einer in der äußeren Mantelfläche angeordneten axial erstreckten Nut eine jeweilige sich achsparallel erstreckende Platine angeordnet ist, insbesondere die sich im Wesentlichen über die gesamte axiale Länge des zylindrischen Gehäuses der Energieversorgung erstreckt, bevorzugt wobei diese Platine mit jeder Verbindungsplatine zwischen zwei benachbart axial hintereinanderliegenden Scheibenelementen elektrisch verbunden ist. Diese Platine kann mit jeder vorgenannten Verbindungsplatine zwischen zwei benachbart axial hintereinanderliegenden Scheibenelementen elektrisch verbunden sein.

Diese Platine kann bevorzugt eine Elektronik zum Energiespeicherzellenmanagement, insbesondere zur Prüfung der insbesondere in jedem Segment oder in allen Segmenten einer gemeinsamen Umfangsposition gereihten Zellspannungen umfassen. Diese Platine und deren Elektronik kann auch vorgesehen sein, um die zuvor genannte Funktionsprüfung vorzunehmen. Sofern eine Unterteilung in Segmente logischer / elektrischer Art oder auch mechanischer Art ausgebildet ist, kann die Erfindung vorsehen, dass eine Anzahl von Platinen vorgesehen ist, die der Anzahl der Segmente entspricht.

Die Erfindung sieht unabhängig von den möglichen verschiedenen Ausführungen allgemein vor, dass die durch in und mit den Scheibenelementen oder deren Segmenten nach Reihen- und / oder Parallelschaltung der darin enthaltenen Energiespeicherzellen erzeugten Spannungen genutzt werden, um mit wenigstens einer Steuerelektronik die Phasenspannungen für den Motor zu bilden.

Eine solche Steuerelektronik kann durch Elektronikkomponenten auf wenigstens einer Steuerplatine gebildet werden. Diese Steuerplatine ist erfindungsgemäß zwischen den sich gegenüberliegenden Stirnflächen von Motorgehäuse und Gehäuse der Energieversorgungseinheit angeordnet. Diese wenigstens eine Steuerplatine kann z.B. in einem eigenen scheibenförmigen oder auch segmentierten Gehäuseteil vorgesehen sein, das selbst keine Batteriezellen umfasst und das zwischen dem Motorgehäuse und dem ersten sich axial daran anschließenden Batteriezellen umfassenden Scheibenelement angeordnet ist.

Die stirnseitige Anordnung hat den Vorteil, dass die statorseitigen Phasenanschlüsse des Elektromotors in axialer Richtung in diese wenigstens eine Steuerplatine kontaktierend eingefügt werden können.

Die wenigstens eine Steuerplatine kann in zumindest teilweiser Überdeckung der axialen Stirnflächen von der Energieversorgungseinheit (bzw. dessen Gehäuse) und dem Elektromotor angeordnet sein. Erfindungsgemäß ist sie eingerichtet, die Energie der Energieversorgungseinheit auf das Statorbestromungssystem des Elektromotors zu verteilen, insbesondere gesteuert oder geregelt zu verteilen.

Erfindungsgemäß ist jeweils allen an einer gemeinsamen Umfangsposition angeordneten Segmenten von axial hintereinanderliegenden Scheibenelementen (Energiespeichermodul) eine eigene Steuerplatine oder ein ebenso segmentförmiger Abschnitt einer einzigen Steuerplatine zugeordnet, insbesondere die insgesamt kreisscheibenförmig ausgebildet ist und die an dem Statorbestromungssystem angeschlossen ist, insbesondere jedes Segment an einem Teil des Statorbestromungssystems, der sich über denselben Winkelbereich erstreckt, wie das betreffende Segment.

Das genannte Energiespeichermodul bildet somit mit der jeweils zugeordneten Steuerplatine bzw. deren Segment das bereits zuvor angesprochene Funktionsmodul, d.h. eine betriebsfertige Einheit zum Betrieb des Motors.

Durch die wenigstens eine Steuerplatine, insbesondere deren Segmente ist sodann insgesamt eine Gesamt-Leistungselektronik zur Steuerung des Elektromotors ausgebildet, an der die jeweiligen gereihten Summenspannungen von den an einer gemeinsamen Umfangsposition axial hintereinanderliegenden Segmenten anliegen. Hierdurch wird der eingangs genannte Vorteil erschlossen, dass der Elektromotor mit der Energie schon alleine der Segmente einer einzigen gemeinsamen Umfangsposition betreibbar ist, da die Gesamtleistungselektronik durch eine Summe einzelner Leistungselektroniken gebildet ist, die jeweils für sich in der Lage sind, den Motor zu betreiben. Jede Leistungselektronik umfasst dabei bevorzugt einen Pulswechselrichter.

Eine ganz besonders bevorzugte Ausführungsform der Erfindung kann es vorsehen, dass das Statorbestromungssystem des Elektromotors durch eine Vielzahl bestrombarer Stäbe ausgebildet ist, die sich in axialer Richtung durch den Stator des Elektromotors erstrecken und an einem ihrer Enden mit einem gemeinsamen Kurzschlußring verbunden sind und an dem anderen Ende mit einer Steuerplatine verbunden sind, insbesondere einer Steuerplatine der vorgenannten Art, die zwischen Motor und Energieversorgung angeordnet ist.

Es kann hier vorgesehen sein, dass die Stäbe einer Anzahl von mehr als 3 Phasen, bevorzugt wenigstens 20 Phasen, weiter bevorzugt wenigstens 30 Phasen zugeordnet sind. Durch diese signifikante Erhöhung der Phasenanzahl gegenüber dem Stand der Technik kann erzielt werden, dass die Spannungsdifferenz zwischen zwei Phasen oder einer Phase und Masse kleiner gleich 60 Volt ist. Dies führt zu dem eingangs genannten Vorteil, dass die Isolationsanforderungen deutlich kleiner sind und sich hierdurch insgesamt die Konstruktion vereinfacht und günstiger wird im Vergleich zum Stand der Technik.

Wenngleich die Ausbildung des Stators mit Stäben in dieser Ausführung bevorzugt ist, da der Nutfüllfaktor im Stator gegenüber Spulen verbessert ist, kann grundsätzlich eine solche Erhöhung der Phasenanzahl auch mit gewickelten Statorspulen erzielt werden und ist ebenso von der Erfindung umfasst.

Die bevorzugte Verwendung von Stäben führt auch zu dem Vorteil, dass niedrigere Motorinduktivitäten erzeugt werden, so dass die Reduzierung der Phasenspannungen der Beherrschung der Stromanstiegsgeschwindigkeiten zuträglich ist.

Die Schalter der Steuerplatine(n) oder deren Segmente zur Bestromung der Phasenanschlüsse des Stators können vorzugsweise als MOSFETs ausgeführt sind, insbesondere wenn die Betriebsspannung auf weniger als 60V reduziert wird. Die Schalter werden bevorzugt in einer Halbbrücken-Konfiguration betrieben, wobei jede Halbbrücke einen Stab des Motors versorgen kann.

In einer einfachen Ausführungsform der Erfindung kann das Statorbestromungssystems mit elektrischer Masse und einer positiven Versorgungsspannung betrieben werden. Ein bevorzugte Ausführung kann jedoch auch vorsehen, dass der Kurzschlussring an der der Leistungselektronik / Steuerplatine(n) gegenüberliegenden Seite auf Masse liegt und die Stäbe zwischen zwei um Masse herum symmetrische Spannungen geschaltet werden. Damit kann jeder Stab individuell und unabhängig von den anderen Stäben bestromt werden.

In einer bevorzugten Ausführungsform wird die magnetische Polpaarzahl im Rotor des Motors gleich der Anzahl der in Umfangsrichtung liegenden (zumindest logischen / elektrischen) Segmente gewählt, von denen die an einer gemeinsamen Umfangsposition axial hintereinander liegenden Segmente alle elektrisch zu einer zusammenwirkenden Untereinheit zusammengeschaltet sein können, also bevorzugt ein in sich autarke Energieversorgungsuntereinheit der gesamten Energieversorgung bildet.

Die Leistungselektronik wird ebenfalls in eine entsprechende Anzahl von Subeinheiten unterteilt, wie es vorangehend anhand der mehreren Segmente einer Steuerplatine erläutert wurde. Statt einer nur "logischen" bzw. elektrischen Segmentierung kann eine Steuerplatine auch mechanisch segmentiert sein, also durch mehrere Steuerplatinensegmente gebildet werden.

Dabei können räumlich an einer gemeinsamen Umfangsposition liegende Einheiten von Segmenten und Steuerplatine(n) zu Funktionsmodulen zusammengefasst werden, die unabhängig voneinander betrieben und somit als Subantriebs-Module angesehen werden können, insbesondere auch wenn diese mechanisch miteinander verbunden sind.

Bevorzugt kann es dabei vorgesehen sein, dass sich im Betrieb die Drehmomente der Funktionsmodule zu einem Gesamtdrehmoment für den Antrieb addieren, die Einzel-Drehmomente der jeweiligen Funktionseinheiten müssen jedoch nicht unbedingt identisch sein. Dieses Konzept bietet über die bloße Integration von Motor, Leistungselektronik und Batterie hinaus folgende bereits eingangs angedeutete Vorteile:
1.) bei einem Ausfall eines Funktionsmoduls (zum Beispiel alle axial hintereinander liegenden Segmente einer Umfangsposition, deren Verbindungsplatinen, Batteriemanagementplatine und stirnseitige Steuerplatine) können die verbleibenden Funktionsmodule weiterhin betrieben werden, was einen Gesamtsystemausfall verhindert und lediglich zu einer Leistungs- bzw. Reichweiteneinbuße führt
2.) Da Batteriezellen unterschiedlich altern, ist im Laufe der Zeit mit unterschiedlichen Zellkapazitäten allein aufgrund von Streuung zu rechnen. Innerhalb eines Funktionsmoduls der Energieversorgung wird diese Streuung bevorzugt durch sog. passives Balancing ausgeglichen, d.h. (vereinfacht ausgedrückt) zu hoch geladene Zellen werden auf das Niveau der niedriger geladenen Zellen entladen. Alternativ kann innerhalb eines Funktionsmoduls das Balancing auch aktiv erfolgen, d.h. die Energie von zu hoch geladenen Zellen wird auf niedriger geladene Zellen mittels induktiven oder kapazitiven Verfahren übertragen.

Zwischen den Funktionsmodulen kann der Angleich allerdings auch über die Aufteilung des Gesamtdrehmoments auf die einzelnen Funktionsmodule erfolgen.

Zur Bestimmung des Lade- und Alterungszustands der Energiespeicherzellen / Batteriezellen sowie zur Einstellung des Drehmoments des Motors kann es bevorzugt vorgesehen sein, den Strom in der Energieversorgungseinheit, bevorzugt separat in jedem Funktionsmodul sowie in jedem einzelnen Stab zu überwachen.

Hierzu kann die Blechung des Motors durch weitere Bleche mit einem kleineren Innendurchmesser ergänzt werden, bei welchen die Nut bis zum Innendurchmesser verlängert ist. Hierdurch kann ein Hall-Sensor direkt von der Leistungselektronik in die Nut gesteckt werden. Der Sensor ist somit in den magnetischen Kreis um den jeweiligen Stab herum eingebunden, magnetisch störfest verbaut und gleichzeitig auf kürzest möglichem Weg mit der Auswerteeinheit, z.B. einem AD-Wandler verbunden.

Die Messung des Stroms in der Energieversorgung, bevorzugt jedem Funktionsmodul kann über Durchkontaktierungen in den Verbindungsplatinen erfolgen. Wenn ein Strom über diese fließt, so erzeugt dieser Strom einen Spannungsabfall, welcher im Batterie-Management-System ausgewertet wird. Somit dienen die Verbindungsplatinen nicht nur der Verbindung zwischen je zwei axial hintereinander liegenden Segmenten und der Herausführung der Zellspannungen, sondern erfüllen gleichzeitig die Aufgabe der Stromsensierung.

Es kann weiterhin vorgesehen sein, am Kurzschlussring zusätzlich einen zentralen Stromsensor anzuordnen, der den Strom vom Kurzschlussring gegen eine Referenz, z.B. ein Fahrzeugchassis misst. Im "Gut- Fall" ist der Strom durch diesen Sensor gleich der Summe der Ströme durch alle Stäbe, somit kann eine Diagnose, der einzelnen Stromerfassungseinheiten an den Stäben vorgenommen werden. Stimmt der an dem zentralen Sensor gemessene Wert nicht mit der Summe der Stabströme überein, so wird ein Fehler diagnostiziert.

Bei einer korrekt funktionierenden Regelung ist darüber hinaus der Strom durch den am Kurzschlussring angeordneten Sensor Null.

Zur Entwärmung (Kühlung) des Systems kann es vorgesehen werden, die im Elektromotor und der Leistungselektronik auf der oder den Steuerplatinen entstehende Wärme getrennt von der in der Energieversorgung, insbesondere in den Segmenten entstehende Wärme herauszuführen, insbesondere eine möglichst geringe thermische Kopplung zwischen dem zylindrischen Gehäuse der Energieversorgung und den anderen beschriebenen Komponenten zu realisieren. Damit wird sichergestellt, dass die Motorwärme nicht zur Aufheizung der Energieversorgung und so zu einer beschleunigten Degradation der Batteriezellen führt.

Hierfür kann es vorgesehen sein, dass die Energieversorgung und der Elektromotor zueinander wärmetechnisch isoliert sind, insbesondere durch eine axiale Beabstandung, bevorzugt über welche hinweg die Gehäuse von der Energieversorgung und des Elektro-Motors nur durch Stege verbunden sind, welche also eine statische Anbindung ermöglichen, aber nur vergleichsweise wenig Wärmeübertrag zulassen.

Es kann insbesondere in Kombination mit der wärmetechnischen Entkopplung, allerdings auch unabhängig von dieser das zylindrische Gehäuse der Energieversorgung, insbesondere jedes Scheibenelement in axialer Richtung auf Führungsstäbe aufsteckbar oder aufschiebbar sein, die sich von einer Stirnfläche des Elektromotors in axialer Richtung erstrecken. Die Scheibenelemente oder bei einer mechanischen Segmentierung die entsprechenden Segmente weisen hierfür axiale Durchgänge auf, deren Anordnung mit der Position der Führungsstäbe übereinstimmt.

Der Elektromotor und die Energieversorgung weisen bevorzugt jeweils eine eigene und voneinander unabhängige Entwärmungssysteme auf, insbesondere durch Heatpipes, die sich axial durch den Elektro-Motor und/oder die Energieversorgung erstrecken, bevorzugt jeweils in Nuten, die auf den jeweilgen äußeren Oberflächen von Motorgehäuse und Gehäuse der Energieversorgung vorgesehen sind. Die Wärme von Motor und Energieversorgung wird bevorzugt zu gegenüberliegenden Seiten transpostiert. Bevorzugt wird dabei die Entwärmung der auf der wenigstens einen Steuerplatine vorgesehenen Leistungselektronik über die Heatpipes vorgenommen, die dem Motor zugeordnet sind.

Es kann weiterhin auch vorgesehen sein, dass zwischen dem Gehäuse der Energieversorgung und dem Motor, insbesondere im vorgenannten axialen Abstandsbereich ein thermisch isolierendes Material verbaut ist. Ggfs. kann ein scheibenförmiges Gehäuseteil, dass die Steuerplatine aufnimmt thermisch entkoppelnd ausgelegt sein, z.B. aus einem Kunststoff und somit das isolierende Material bilden.

In einer weiteren Ausführungsform der Erfindung kann auch die Entwärmung von Motor und Leistungselektronik über Heatpipes erfolgen, insbesondere wie zuvor beschrieben und die Entwärmung der Energieversorgung kann über ein anderes Kühlkonzept bspw. eine Flüssigkeits-Kühlung vorgenommen werden.

In bevorzugter Ausführung sind die Heatpipes an die Stirnseite des Motors (der Leistungselektronik abgewandt) und des Energieversorgungsgehäuses (auch der Leistungselektronik abgewandt) geführt und schaffen so eine thermische Schnittstelle, so dass die durch die Heatpipes axial herausgeführte Wärme entweder durch Luft- oder durch Flüssigkeitskühlung abgeführt werden kann.

Zur Erfassung des Drehwinkels des Motors können klassische Rotor-Lage-Geber auf magnetisch-induktiver Basis eingesetzt werden. Diese eignen sich aufgrund ihrer Baugröße jedoch nur sehr bedingt für ein solch kompaktes System, so dass andere technische Lösungen hier vorteilhaft erscheinen.

Es erscheint vorteilhaft, die Drehwinkelerfassung über einen auf der Welle montierten Permanentmagneten und einen auf einer darüberliegenden Platine, z.B. der stirnseitigen Steuerplatine montierten Drehwinkelsensor zu realisieren.

Hierfür kommen sowohl 360°-Hall-Sensoren infrage, besonders vorteilhaft erscheinen aber 360° magnetoresistive Sensoren basierend auf dem GMR oder auf dem TMR-Effekt. Aufgrund der Symmetrie des Systems bei einer geraden Polpaarzahl im Rotor und einer entsprechenden Zahl von Energieversorgungsuntereinheiten (Funktionseinheiten) und Leistungselektronik-Enheiten (Steuerplatinen) kann in diesem Fall anstelle eines 360°-fähigen Drehwinkelsensors auch ein 180°-Drehwinkelsensor eingesetzt werden. Dies ermöglicht die Verwendung von AMR-Winkelsensoren (Anisotroper magnetoresistiver Effekt), welche besonders störfeldrobust und kostengünstig sind.

Eine bevorzugte Ausführungsform wird anhand der nachfolgenden Figuren beschrieben:

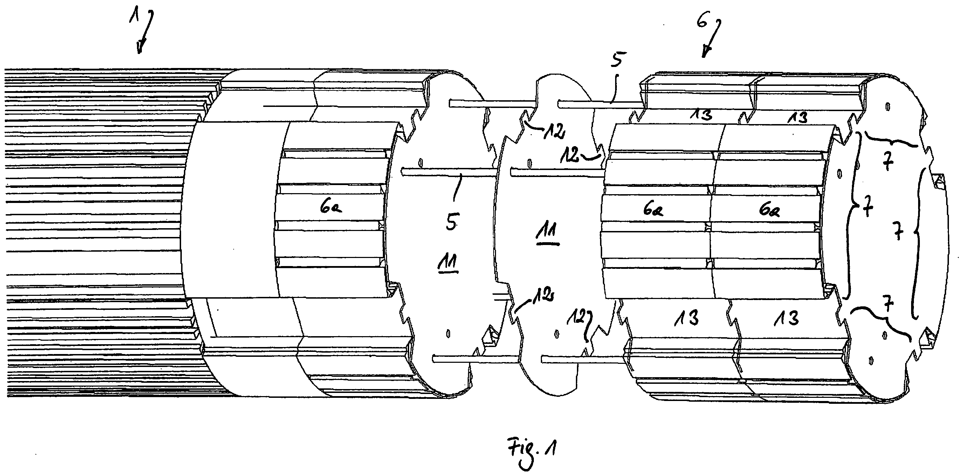

Die Figur 1 zeigt ein erfindungsgemäßes Elektro-Antriebssystem mit einem Elektromotor 1 und einer Energieversorgung 6, die axial benachbart am Elektromotor befestigt ist.

Die Energieversorgung 6 ist in einem zylindrischen Gehäuse untergebracht, dass hier in axialer Richtung mechanisch unterteilt ist in mehrere Scheibenelemente 6a. Die Scheibenelemente 6a sind auf Führungsstäbe 5 aufgeschoben, die sich von einer Motorstirnseite in axialer Richtung wegerstrecken

Jedes Scheibenelement ist logisch bzw. hinsichtlich der darin vorgenommenen Verschaltung in Scheiben-Segmente 7 unterteilt sein, die hier durch die breiten Nute 13 getrennt sind. Ein jeweiliges Segment ist auf einer Umfangsposition angeordnet, die sich hier über einen Winkelbereich von 90 Grad erstreckt, da eine Aufteilung in Umfangsrichtung in 4 Segmente vorliegt. Die Segmentierung ist hier jedoch nicht mechanisch ausgeführt, d.h. jedes Scheibenelement 6a bildet eine mechanische Einheit. Grundsätzlich ist es jedoch auch möglich die Segmentierung ebenso mechanisch auszuführen.

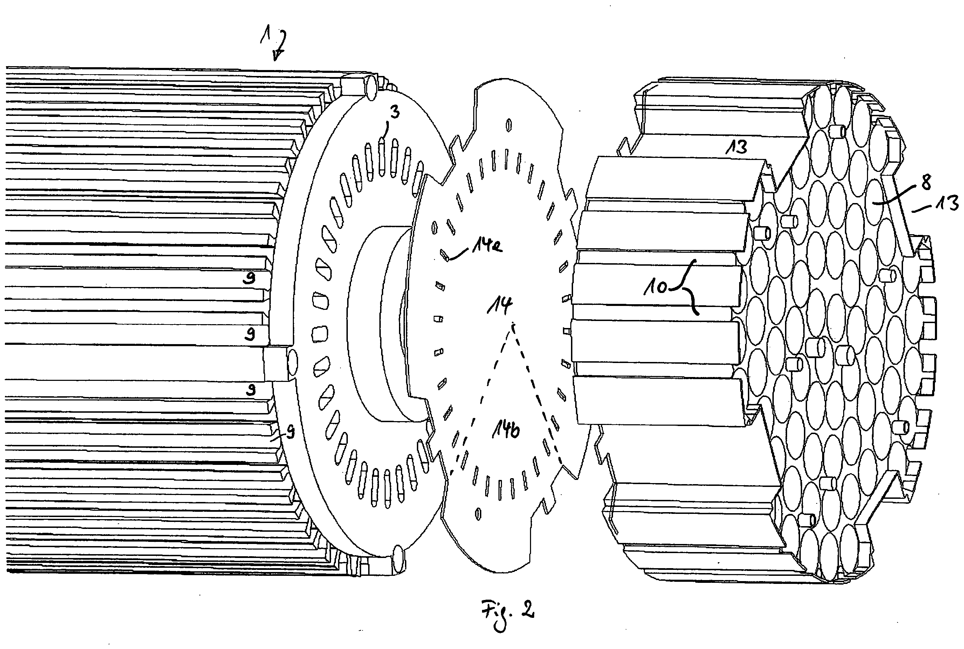

Es ist hier bevorzugt vorgesehen in den zylindrischen Ausnehmungen 8 standardisierte Batteriezellen einzusetzen, um die Energieversorgung des Motors zu realisieren, wie es Figur 2 zeigt. Diese Figur 2 zeigt auch statorstirnseitige Durchgänge 3 in denen jeweils ein nicht gezeigter Stab zur Bestromung des Stator einliegt. Die Stäbe können bevorzugt jeweils oder zu mehreren einer Phase zugeordnet sein, insbesondere mit einer Phasenspannung von jeweils kleiner 60 V.

In den Nuten 9 können Heatpipes angeordnet werden, um stirnseitig in einer Leistungselektronik der Steuerplatine 14 entstehende Wärme und die Wärme des Motors 1 auf die Seite der Abtriebswelle zu überführen, die hier nicht gezeigt ist. Die Steuerplatine weist korrespondierende Anschlüsse 14a für die Stäbe auf.

Auch die Scheibenelemente 6a können außen Nute 10 aufweisen, in denen Heatpipes zum Wärmetransport einliegen können.

Die Figur 1 zeigt weiterhin, dass zwischen zwei benachbarten Scheibenelementen 6a, insbesondere zwischen jedem Paar von zwei benachbarten Scheibenelementen 6a, Verbindungsplatinen 11 vorgesehen sein können (insbesondere mindestens eine), um die Verschaltung der Batteriezellen innerhalb eines Scheibenelementes oder dessen zumindest logischen / elektrischen Segments 7 und zwischen den benachbarten Scheibenelement 6a, bzw. Segmenten 7 vorzunehmen. Z.B. können hierdurch alle in den Schiebenelementen bzw. Segmenten enthaltenen Batteriezellen in Reihe geschaltet werden. Bei einer vorgenommenen Segmentierung kann jedes Segment auch eine eigene zugeordnete Platine aufweisen.

An der äußeren Peripherie weist die Verbindungsplatine 11 mehrere Kontakte 12 auf, die mit einer hier nicht gezeigten Platine verbunden werden können, welche sich im nutförmigen Ausnehmungsbereich 13 befinden kann, der sich in axialer Richtung erstreckt und in der äußeren Mantelfläche jedes Scheibenelementes 6a angeordnet ist. Bei einer Segmentierung können Platinen in der Anzahl der Segmente vorgesehen sein, die sodann bevorzugt zwischen je zwei in Umfangsrichtung aufeinanderfolgenden Segmenten 7 angeordnet sind. Die nicht gezeigte Platine kann hier das Batteriemanagement der Batteriezellen übernehmen.

Die in Figur 2 gezeigte Steuerplatine 14 umfasst eine Leistungselektronik, bevorzugt für jedes logische Segment eine segmentartig angeordnete Leistungselektronik 14b zur Ansteuerung derjenigen Stäbe 3 des Stators, die in demselben Winkelbereich des logischen Segmentes in der Platine 14 kontaktiert einliegen.

Die Steuerplatine 14 überdeckt hier einen Teil der Stirnseite des Motors 3 und im Wesentlichen vollständig die Stirnseite des letzten bzw. ersten Scheibenelementes 6a.

Die hier gezeigte Gesamtanordnung aus allen axial hintereinanderliegenden logischen Segmenten 7 einer jeweiligen gemeinsamen Umfangsposition mit den darin enthaltenen Batteriezellen und Platinen bildet zusammen mit der Steuerplatine 14 bzw. deren Segment 14b eine Funktionseinheit, mit welcher alleine bereits der Elektromotor betrieben werden kann.

Die in diesem Beispiel gebildeten vier Funktionseinheiten bilden eine Energieversorgung im Sinne der Erfindung, die sich in Umfangsrichtung über volle 360 Grad erstreckt, insbesondere hierbei zusätzlich eine vierfache Redundanz bildet.

Die Erfindung ist nicht auf die hier dargestellte 4-fach-Segmentierung beschränkt. Es können sowohl mehr als auch weniger Segmente vorgesehen sein.

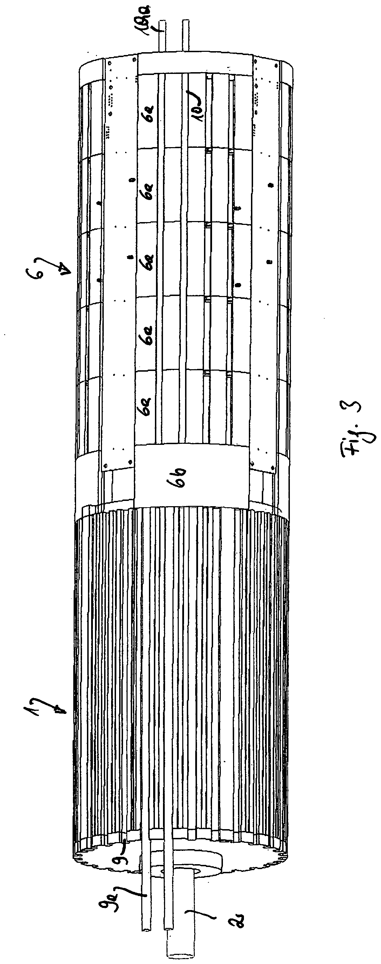

Figur 3 zeigt eine Übersicht eines gesamten Systems mit Motor 1, dessen Welle 2 und gegenüberliegend axial neben dem Motor 1 angeordneter Energieversorgung 6 in einem Gehäuse aus mehreren Scheibenelementen 6a. Diese können hier mittelbar über eine Zwischenscheibe 6b am Motor befestigt sein, welche die Steuerplatine(n) der Leistungselektronik umfasst.

Die hier vorgesehenen Heatpipes 9a in den Nuten 9 der Motormantelfläche führen die Wärme zur Seite der Abtriebswelle 2 und die Heatpipes 10a in den Nuten 10 des Gehäuses der Energieversorgung auf die gegenüberliegende Seite. Somit wird ein Wärmefluß zu sich axial gegenüberliegenden Seiten erzeugt und immer weg von der etwa mittig des Systems liegenden Leistungselektronik.

## Patentansprüche

1. Elektro-Antriebssystem, insbesondere für Fahrzeuge, umfassend einen Elektromotor (1), eine Energieversorgung (6), ein Motorgehäuse und ein zylindrisches Gehäuse der Energieversorgung (6), wobei die Energieversorgung (6) axial benachbart zum Elektromotor (1) und in Umfangsrichtung um die Drehachse des Elektromotors (1) herum angeordnet ist, insbesondere in einer Winkelerstreckung von 360 Grad, **dadurch gekennzeichnet, dass**
a. das Gehäuse der Energieversorgung (6) in der axialen Richtung in mehrere Scheibenelemente (6a) unterteilt ist, wobei jedes Scheibenelement in Umfangsrichtung in wenigstens zwei zumindest logische / elektrische Segmente (7) unterteilt ist, wobei eine logische / elektrische Verschaltung durch die elektrische Verschaltung der im Gehäuse angeordneten Batteriezellen vorgenommen ist, wobei die Gesamtanzahl aller in axialer Richtung an einer gemeinsamen Umfangsposition hintereinanderliegenden zumindest logischen / elektrischen Segmente (7) ein Energiespeichermodul bildet, mit welchem alleine bereits der Betrieb des Elektromotors möglich ist, und
b. zwischen den sich gegenüberliegenden Stirnflächen von Motorgehäuse und Gehäuse der Energieversorgung (6) wenigstens eine Steuerplatine (14) angeordnet ist, die eingerichtet ist, die Energie der Energieversorgung (6) auf das Statorbestromungssystem des Elektromotors (1) zu verteilen, insbesondere gesteuert oder geregelt zu verteilen, wobei
c. die gebildeten Energiespeichermodule jeweils in Verbindung mit einer eigenen Elektronik auf der wenigstens einen Steuerplatine ein jeweiliges autarkes Funktionsmodul bilden, das jeweils alleine ausreicht, um den Motor zu betreiben
d. jeweils einem Energiespeichermodul eine eigene Steuerplatine (14) oder ein Segment (14b) einer einzigen Steuerplatine (14) zugeordnet ist,
e. wobei durch die zugeordneten Steuerplatinen (14) oder durch die Segmente (14b) einer einzigen Steuerplatine (14) insgesamt eine Gesamtleistungselektronik zur Steuerung des Elektromotors ausgebildet ist, an der die jeweiligen gereihten Summenspannungen von den an einer gemeinsamen Umfangsposition axial hintereinander liegenden Segmenten anliegen, und die Gesamtleistungselektronik durch die Summe einzelner Leistungselektroniken gebildet ist, die jeweils für sich in der Lage sind, den Motor zu betreiben.

2. Elektro-Antriebssystem nach Anspruch 1, **dadurch gekennzeichnet, dass** die Energieversorgung (6), insbesondere ein diese umfassendes Gehäuse an einer axialen Stirnseite des Motorgehäuses angeordnet ist, insbesondere an einer axialen Stirnfläche des Motorgehäuses befestigt ist, bevorzugt an derjenigen Stirnfläche, die der Motorabtriebswelle (2) gegenüberliegt.

3. Elektro-Antriebssystem nach Anspruch 1 oder 2, **dadurch gekennzeichnet, dass** die Motorabtriebswelle (2) durch die Energieversorgung, insbesondere ein diese umfassendes Gehäuse hindurchgeführt ist, insbesondere hierdurch die Energieversorgung (6) in Umfangsrichtung um die Motorabtriebswelle (2) herum angeordnet ist.

4. Elektro-Antriebssystem nach einem der vorherigen Ansprüche, **dadurch gekennzeichnet, dass** die Zylinderachse des Gehäuses der Energieversorgung (6) und die Motorachse kollinear liegen, insbesondere wobei das Gehäuse der Energieversorgung (6) in radialer Richtung nicht über das Motorgehäuse übersteht, besonders bevorzugt die Mantelflächen von Motorgehäuse und Gehäuse der Energieversorgung (6) fluchtend angeordnet sind.

5. Elektro-Antriebssystem nach einem der vorherigen Ansprüche, **dadurch gekennzeichnet, dass** das Gehäuse der Energieversorgung (6) eine Vielzahl von Ausnehmungen (8), insbesondere zylindrischen Ausnehmungen (8) aufweist, bevorzugt, die sich in axialer Richtung erstrecken, in welchen Energiespeicherzellen aufgenommen sind oder zumindest aufnehmbar sind.

6. Elektro-Antriebssystem nach einem der vorherigen Ansprüche, **dadurch gekennzeichnet, dass** die axiale Länge der jeweiligen Scheibenelemente angepasst ist, um genau eine axial liegende Energiespeicherzelle in einer jeweiligen zylindrischen Ausnehmung (8) aufzunehmen.

7. Elektro-Antriebssystem nach Anspruch 6, **dadurch gekennzeichnet, dass** zwischen je zwei benachbart axial hintereinanderliegenden Scheibenelementen (6a) wenigstens eine Verbindungsplatine (11) angeordnet ist.

8. Elektro-Antriebssystem nach Anspruch 7, **dadurch gekennzeichnet, dass** mit der wenigstens einen Verbindungsplatine (11), insbesondere einer jeweiligen Verbindungsplatine (11) die Energiespeicherzellen in wenigstens einer Teilanzahl, insbesondere gruppenweise in einem jeweiligen Scheibenelement (6a) elektrisch in Reihe geschaltet sind, insbesondere wobei verschiedene Gruppen in Umfangsrichtung in dem Scheibenelement (6a) beabstandet sind.

9. Elektro-Antriebssystem nach Anspruch 7 oder 8, **dadurch gekennzeichnet, dass** in wenigstens einem radial außen liegenden Bereich des Gehäuses der Energieversorgung (6), insbesondere in wenigstens einer in der äußeren Mantelfläche angeordneten axial erstreckten Nut (13) eine jeweilige sich achsparallel erstreckende Platine angeordnet ist, insbesondere die sich im Wesentlichen über die gesamte axiale Länge des Gehäuses der Energieversorgung (6) erstreckt, bevorzugt wobei diese Platine mit jeder Verbindungsplatine (11) zwischen zwei benachbart axial hintereinanderliegenden Scheibenelementen (6a) elektrisch verbunden ist.

10. Elektro-Antriebssystem nach Anspruch 9, **dadurch gekennzeichnet, dass** die Platine eine Elektronik zum Energiespeicherzellenmanagement, insbesondere zur Prüfung der insbesondere in jedem Scheibenelement (6a) oder in allen zumindest logischen / elektrischen Segmenten (7) der Scheibenelemente (6a) auf einer gemeinsamen Umfangsposition gereihten Zellspannungen umfasst.

11. Elektro-Antriebssystem nach einem der vorherigen Ansprüche, **dadurch gekennzeichnet, dass** das Statorbestromungssystem durch eine Vielzahl bestrombarer Stäbe (3) ausgebildet ist, die sich in axialer Richtung durch den Stator des Elektromotors (1) erstrecken und an einem ihrer Enden mit einem gemeinsamen Kurzschlußring verbunden sind und an dem anderen Ende mit der wenigstens einen Steuerplatine (14) verbunden sind.

12. Elektro-Antriebssystem nach einem der vorherigen Ansprüche, **dadurch gekennzeichnet, dass** das Statorbestromungssystem eine Vielzahl von Bestromungseinheiten, insbesondere Wicklungen oder bevorzugt Stäben (3) gemäß Anspruch 11 aufweist, die einer Anzahl von mehr als 3 Phasen, bevorzugt wenigstens 6 Phasen zugeordnet sind, insbesondere wobei die Spannungsdifferenz zwischen zwei Phasen oder einer Phase und Masse kleiner gleich 60 Volt ist.

13. Elektro-Antriebssystem nach einem der vorherigen Ansprüche, **dadurch gekennzeichnet, dass** das Gehäuse der Energieversorgung (6), insbesondere jedes Scheibenelement (6a) in axialer Richtung auf Führungsstäbe (5) aufsteckbar oder aufschiebbar ist, die sich von einer Stirnfläche des Elektromotors (1) in axialer Richtung erstrecken.

14. Elektro-Antriebssystem nach einem der vorherigen Ansprüche, **dadurch gekennzeichnet, dass** die Energieversorgung (6) und der Elektromotor (1) zueinander wärmetechnisch isoliert sind, insbesondere durch eine axiale Beabstandung, bevorzugt über welche hinweg die Gehäuse von der Energieversorgung (6) und des Elektromotors (1) nur durch Stege oder Führungsstäbe (5) verbunden sind.

15. Elektro-Antriebssystem nach Anspruch 14, **dadurch gekennzeichnet, dass** der Elektromotor (1) und die Energieversorgung jeweils eine eigene und voneinander unabhängige Entwärmungssysteme aufweisen, insbesondere durch Heatpipes, die sich axial durch den Elektromotor (1) und/oder die Energieversorgung (6) erstrecken, insbesondere zum Transport der Wärme zu gegenüberliegenden Seiten.

16. Elektro-Antriebssystem nach einem der vorherigen Ansprüche, **dadurch gekennzeichnet, dass** in der Blechung des Elektromotors (1) wenigstens eine Nut bis zum Innendurchmesser des Stators verlängert ist, in welcher ein Magnetfeldsensor angeordnet ist, der von der Leistungselektronik einer Steuerplatine (14) in die Nut hineinragt.

17. Elektro-Antriebssystem nach einem der vorherigen Ansprüche, **dadurch gekennzeichnet, dass** zur Drehwinkelerfassung auf der Welle (2) des Elektromotors (1) wenigstens ein Permanentmagnet angeordnet ist, dessen Magnetfeld durch einen auf einer darüber liegenden Platine, insbesondere auf einer stirnseitigen Steuerplatine (14) montierten Drehwinkelsensor, insbesondere 180-Grad-Sensor, erfassbar ist.

## Claims

1. Electric drive system, in particular for vehicles, comprising an electric motor (1), a power supply (6), a motor housing and a cylindrical housing of the power supply (6), wherein the power supply (6) is arranged axially adjacent to the electric motor (1) and around the rotation axis of the electric motor (1) in the circumferential direction, in particular in an angular extent of 360°,
**characterized in that**
a. the housing of the power supply (6) is subdivided into a plurality of disc elements (6a) in the axial direction, wherein each disc element is subdivided into at least two at least logical/electrical segments (7) in the circumferential direction, wherein a logical/electrical interconnection is performed by the electrical interconnection of the battery cells which are arranged in the housing, wherein the total number of all of the at least logical/electrical segments (7) which are situated one behind the other in a common circumferential position in the axial direction forms an energy storage module, operation of the electric motor already being possible with the said energy storage module alone, and
b. at least one control circuit board (14) is arranged between the opposite end faces of the motor housing and the housing of the power supply (6), which control circuit board is designed to distribute the power of the power supply (6) to the stator energization system of the electric motor (1), in particular to distribute the said power with open-loop or closed-loop control, wherein
c. the energy storage modules formed each form a respective autonomous functional module in conjunction with a dedicated electronics system on the at least one control circuit board, the said autonomous functional module alone being sufficient in order to operate the motor
d. a dedicated control circuit board (14) or a segment (14b) of a single control circuit board (14) is associated with an energy storage module in each case,
e. wherein overall a total power electronics system for controlling the electric motor is formed by the associated control circuit boards (14) or by the segments (14b) of a single control circuit board (14), the respective combined sum voltages of the segments which are situated axially one behind the other in a common circumferential position bearing against the said total power electronics system, and the total power electronics system is formed by the sum of individual power electronics systems which are each able to operate the motor.

2. Electric drive system according to Claim 1, **characterized in that** the power supply (6), in particular a housing which encompasses the said power supply, is arranged on an axial end side of the motor housing, in particular is attached to an axial end face of the motor housing, preferably on that end face which is situated opposite the motor output shaft (2).

3. Electric drive system according to Claim 1 or 2, **characterized in that** the motor output shaft (2) is guided through the power supply, in particular a housing which encompasses the said power supply, in particular the power supply (6) is arranged around the motor output shaft (2) in the circumferential direction in this way.

4. Electric drive system according to one of the preceding claims, **characterized in that** the cylinder axis of the housing of the power supply (6) and the motor axis are situated in a colinear manner here, in particular wherein the housing of the power supply (6) does not project beyond the motor housing in the radial direction, particularly preferably the lateral surfaces of the motor housing and of the housing of the power supply (6) are arranged in alignment.

5. Electric drive system according to one of the preceding claims, **characterized in that** the housing of the power supply (6) has a multiplicity of recesses (8), in particular cylindrical recesses (8), preferably which extend in the axial direction, in which recesses energy storage cells are accommodated or at least can be accommodated.

6. Electric drive system according to one of the preceding claims, **characterized in that** the axial length of the respective disc elements is adjusted in order to precisely receive an axially situated energy storage cell in a respective cylindrical recess (8).

7. Electric drive system according to Claim 6, **characterized in that** at least one connecting circuit board (11) is arranged between in each case two disc elements (6a) which are situated adjacently axially one behind the other.

8. Electric drive system according to Claim 7, **characterized in that** at least some of the energy storage cells, in particular in groups in a respective disc element (6a), are connected electrically in series by the at least one connecting circuit board (11), in particular a respective connecting circuit board (11), in particular wherein different groups are spaced apart in the circumferential direction in the disc element (6a).

9. Electric drive system according to Claim 7 or 8, **characterized in that** a respective circuit board which extends axially in parallel, in particular which extends substantially over the entire axial length of the housing of the power supply (6), is arranged in at least one radially outer region of the housing of the power supply (6), in particular in at least one slot (13) which is arranged in the outer lateral surface and extends in an axial manner, preferably wherein this circuit board is electrically connected to each connecting circuit board (11) between two disc elements (6a) which are situated adjacently axially one behind the other.

10. Electric drive system according to Claim 9, **characterized in that** the circuit board comprises an electronics system for energy storage cell management, in particular for checking the cell voltages which are combined in particular in each disc element (6a) or in all at least logical/electrical segments (7) of the disc elements (6a) in a common circumferential position.

11. Electric drive system according to one of the preceding claims, **characterized in that** the stator energization system is formed by a multiplicity of energizable bars (3) which extend through the stator of the electric motor (1) in the axial direction and are connected at one of their ends to a common short-circuiting ring and are connected to the at least one control circuit board (14) at the other end.

12. Electric drive system according to one of the preceding claims, **characterized in that** the stator energization system has a multiplicity of energization units, in particular windings or preferably bars (3) according to Claim 11, which are assigned to a number of more than 3 phases, preferably at least 6 phases, in particular wherein the voltage difference between two phases or one phase and earth is less than or equal to 60 volts.

13. Electric drive system according to one of the preceding claims, **characterized in that** the housing of the power supply (6), in particular each disc element (6a), can be mounted onto or pushed onto guide bars (5) in the axial direction, which guide bars extend from one end face of the electric motor (1) in the axial direction.

14. Electric drive system according to one of the preceding claims, **characterized in that** the power supply (6) and the electric motor (1) are thermally insulated from one another, in particular by an axial distance, preferably over which the housings of the power supply (6) and of the electric motor (1) are connected only by webs or guide bars (5).

15. Electric drive system according to Claim 14, **characterized in that** the electric motor (1) and the power supply each have a dedicated heat-removal system, which heat-removal systems are independent of one another, in particular heat pipes, which extend axially through the electric motor (1) and/or the power supply (6), in particular for transporting the heat to opposite sides.

16. Electric drive system according to one of the preceding claims, **characterized in that**, in the lamination of the electric motor (1), at least one slot is extended as far as the inside diameter of the stator in which a magnetic field sensor is arranged, which magnetic field sensor protrudes into the slot from the power electronics system of a control circuit board (14).

17. Electric drive system according to one of the preceding claims, **characterized in that**, for the purpose of detecting the rotation angle, at least one permanent magnet is arranged on the shaft (2) of the electric motor (1), the magnetic field of the said permanent magnet being detectable by a rotation angle sensor mounted on a circuit board which is situated over the magnet, in particular mounted on an end-side control circuit board (14), in particular a 180-degree sensor.

## Revendications

1. Système d'entraînement électrique, notamment pour des véhicules, comprenant un moteur électrique (1), une source d'énergie (6), un carter de moteur et un boîtier cylindrique de la source d'énergie (6), la source d'énergie (6) étant disposée axialement voisine du moteur électrique (1) et autour de l'axe de rotation du moteur électrique (1) dans la direction périphérique, notamment dans une extension angulaire de 360 degrés,
**caractérisé en ce que**
a. le boîtier de la source d'énergie (6) est subdivisé dans la direction axiale en plusieurs éléments de disque (6a), chaque élément de disque étant subdivisé dans la direction périphérique en au moins deux segments (7) au moins logiques/électriques, une interconnexion logique/électrique étant effectuée par l'interconnexion électrique des cellules de batterie disposées dans le boîtier, le nombre total de tous les segments (7) au moins logiques/électriques se trouvant les uns derrière les autres à une position périphérique commune formant un module d'accumulation d'énergie avec lequel, à lui seul, le fonctionnement du moteur électrique est déjà possible, et
b. au moins une platine de commande (14) est disposée entre les faces frontales se faisant mutuellement face du carter de moteur et du boîtier de la source d'énergie (6), laquelle est conçue pour distribuer l'énergie de la source d'énergie (6) sur le système d'alimentation électrique du stator du moteur électrique (1), notamment la distribuer de manière commandée ou régulée,
c. les modules d'accumulation d'énergie formés formant respectivement, en association avec une électronique propre sur l'au moins une platine de commande, un module fonctionnel respectivement autonome qui suffit à chaque fois pour faire fonctionner le moteur,
d. une platine de commande (14) propre ou un segment (14b) d'une platine de commande (14) unique étant respectivement associé à un module d'accumulation d'énergie,
e. une électronique de puissance totale destinée à commander le moteur électrique, au niveau de laquelle sont appliquées les tensions totales respectivement mises en série des segments disposés axialement les uns derrière les autres au niveau d'une position périphérique commune, étant formée globalement par les platines de commande (14) associées ou par les segments (14b) d'une platine de commande (14) unique, et l'électronique de puissance totale étant formée par la somme d'électroniques de puissance individuelles qui sont respectivement elles-mêmes en mesure de faire fonctionner le moteur.

2. Système d'entraînement électrique selon la revendication 1, **caractérisé en ce que** la source d'énergie (6), notamment un boîtier qui la comprend, est disposée au niveau d'un côté frontal axial du carter de moteur, notamment fixée au niveau d'une face frontale axiale du carter de moteur, de préférence à la face frontale qui est à l'opposé de l'arbre de sortie du moteur (2).

3. Système d'entraînement électrique selon la revendication 1 ou 2, **caractérisé en ce que** l'arbre de sortie du moteur (2) passe à travers la source d'énergie, notamment un boîtier qui la comprend, la source d'énergie (6) étant notamment de ce fait disposée autour de l'arbre de sortie du moteur (2) dans la direction périphérique.

4. Système d'entraînement électrique selon l'une des revendications précédentes, **caractérisé en ce que** l'axe de cylindre du boîtier de la source d'énergie (6) et l'axe du moteur sont disposés de manière colinéaire, le boîtier de la source d'énergie (6) ne faisant notamment pas saillie au-dessus du carter de moteur dans la direction radiale, les enveloppes du carter de moteur et le boîtier de la source d'énergie (6) étant particulièrement préférablement disposés à fleur.

5. Système d'entraînement électrique selon l'une des revendications précédentes, **caractérisé en ce que** le boîtier de la source d'énergie (6) possède une pluralité de cavités (8), notamment des cavités (8) cylindriques, de préférence qui s'étendent dans la direction axiale, dans lesquelles sont accueillies ou au moins peuvent être accueillies des cellules d'accumulateur d'énergie.

6. Système d'entraînement électrique selon l'une des revendications précédentes, **caractérisé en ce que** la longueur axiale des éléments de disque respectifs est adaptée pour accueillir dans une cavité (8) cylindrique respective exactement une cellule d'accumulateur d'énergie reposant axialement.

7. Système d'entraînement électrique selon la revendication 6, **caractérisé en ce qu'**au moins une platine de liaison (11) est disposée entre deux éléments de disque (6a) respectivement disposés axialement voisins les uns derrière les autres.

8. Système d'entraînement électrique selon la revendication 7, **caractérisé en ce que** les cellules d'accumulateur d'énergie sont branchées électriquement en série avec au moins une platine de liaison (11), notamment une platine de liaison (11) respective, en au moins un sous-ensemble, notamment par groupes dans un élément de disque (6a) respectif, différents groupes étant notamment espacés dans la direction périphérique dans l'élément de disque (6a).

9. Système d'entraînement électrique selon la revendication 7 ou 8, **caractérisé en ce qu'**une platine respective qui s'étend parallèlement à l'axe est disposée dans au moins une zone se trouvant radialement à l'extérieur du boîtier de la source d'énergie (6), notamment dans au moins une rainure (13) qui s'étend en étant disposée axialement dans l'enveloppe extérieure, notamment qui s'étend sensiblement sur toute la longueur axiale du boîtier de la source d'énergie (6), cette platine étant de préférence reliée électriquement à chaque platine de liaison (11) entre deux éléments de disque (6a) disposés axialement voisins les uns derrière les autres.

10. Système d'entraînement électrique selon la revendication 9, **caractérisé en ce que** la platine comporte une électronique destinée à la gestion des cellules d'accumulateur d'énergie, notamment destinée à contrôler les tensions de cellule branchées en série sur une position périphérique commune notamment dans chaque élément de disque (6a) ou dans tous les segments (7) au moins logiques/électriques des éléments de disque (6a).

11. Système d'entraînement électrique selon l'une des revendications précédentes, **caractérisé en ce que** le système d'alimentation électrique du stator est formé par une pluralité de barres (3) pouvant être alimentées électriquement, lesquelles s'étendent dans la direction axiale à travers le stator du moteur électrique (1) et sont reliées à l'une de leurs extrémités à une bague de court-circuit commune et sont reliées à l'autre extrémité à l'au moins une platine de commande (14).

12. Système d'entraînement électrique selon l'une des revendications précédentes, **caractérisé en ce que** le système d'alimentation électrique du stator possède une pluralité d'unités d'alimentation électrique, notamment des enroulements ou de préférence des barres (3) selon la revendication 11, qui sont associées à un nombre de phases supérieur à 3, de préférence à au moins 6 phases, la différence de tension entre deux phases ou entre une phase et la masse étant notamment inférieure ou égale à 60 volts.

13. Système d'entraînement électrique selon l'une des revendications précédentes, **caractérisé en ce que** le boîtier de la source d'énergie (6), notamment chaque segment de disque (6a), peut être enfiché ou emmanché dans la direction axiale sur des barres de guidage (5) qui s'étendent dans la direction axiale depuis une face frontale du moteur électrique (1).

14. Système d'entraînement électrique selon l'une des revendications précédentes, **caractérisé en ce que** la source d'énergie (6) et le moteur électrique (1) sont isolés thermiquement l'un de l'autre, notamment par un espacement axial, de préférence par lequel le boîtier de la source d'énergie (6) et le carter du moteur électrique (1) sont uniquement reliés par des éléments jointifs ou des barres de guidage (5).

15. Système d'entraînement électrique selon la revendication 14, **caractérisé en ce que** le moteur électrique (1) et la source d'énergie possèdent respectivement un système de dissipation de chaleur propre et indépendant l'un de l'autre, notamment les caloducs qui s'étendant axialement à travers le moteur électrique (1) et/ou la source d'énergie (6), notamment pour le transport de la chaleur vers le côté opposé.

16. Système d'entraînement électrique selon l'une des revendications précédentes, **caractérisé en ce que** dans l'empilage de tôles du moteur électrique (1), au moins une rainure est prolongée jusqu'au diamètre intérieur du stator, dans laquelle est disposé un capteur de champ magnétique qui fait saillie dans la rainure depuis l'électronique de puissance d'une platine de commande (14).

17. Système d'entraînement électrique selon l'une des revendications précédentes, **caractérisé en ce qu'**au moins un aimant permanent est disposé sur l'arbre (2) du moteur électrique (1) en vue de détecter l'angle de rotation, dont le champ magnétique peut être détecté par un capteur d'angle de rotation, notamment un capteur à 180 degrés, monté sur une platine se trouvant au-dessus de celui-ci, notamment sur une platine de commande (14) côté frontal.
